# EUROPEAN PATENT SPECIFICATION

(11) **EP 0 439 232 B1**
(45) Date of publication and mention of the grant of the patent: **12.07.1995**
(21) Application number: 91200114.6
(22) Date of filing: 22.01.1991
(51) Int. Cl.: C08L 95/00, C10C 3/02

(54) **A method of preparing rubber bitumen and asphalt**
Verfahren zur Herstellung Elastomerbitumen und Asphalt
Procédé pour la préparation de bitume en caoutchouc et d'asphalte

(30) Priority: 23.01.1990 NL 9000162
(43) Date of publication of application: 31.07.1991
(73) Proprietor: Wegenbouwmaatschappij J. Heijmans B.V., NL-5248 JR Rosmalen (NL)
(72) Inventor: van Bochove, Gerrit Gijsbertus, NL-4051 CG Ochten (NL)
(74) Representative: Van kan, Johan Joseph Hubert, Ir.

(56) References cited:
- AT-A- 370 126
- FR-A- 2 512 827
- FR-A- 2 567 447

## Description

The invention relates to a method of preparing rubber bitumen, and optionally asphalt, by homogenisation and heating bitumen, rubber particles and oil.

From FR-A-2 567 447 it is known to produce rubber bitumen by mixing bitumen and rubber at a temperature of about 150°C. In a further step the mixture is further heated between 190 and 200°C until the viscosity is improved in order to obtain a more homogeneous final product.

From French patent application 2,512,827 it is known to prepare rubber bitumen by mixing bitumen with 15-35 wt.% rubber particles (calculated on basis of the weight of bitumen), e.g. obtained from ground rubber tyres, to which one can add 3-15 wt.% oil. In this regard the starting materials have been mixed at first and then supplied to a second mixing drum by using a pump and homogenisation takes places at a temperature at 170-230 °C for a period of 30-120 minutes. Now it appeared to be possible to prepare a rubber bitumen product that can be handled in an improved way of which product the desired properties such as viscosity can be maintained and varied well and as desired, which was not or substantially not possible in the process as disclosed in said French patent application.

From British patent 1,360,616, it is known to produce rubber bitumen by solving rubber particles in an organic solvent for rubber, which mixture then is added to bitumen or asphalt at a temperature of 215 - 300 °C, at which temperature the solvent is evaporated. This is a completely different process than according to the invention, because according to the British patent at first an oil-rubber mixture (20% oil and 80% rubber) is prepared and this mixture is added to molten bitumen. A disadvantage of this known process is the long time before a master batch has been prepared and before this is mixed homogeneously with the bitumen.

According to the Austrian patent 370,126 a bitumen comprising asphalt is prepared in which as adding material solid substances have been added such as gravel and sand and in which process one adds polyolefinic material to the bitumen such as polyethylene and/or polypropylene and the temperature of the homogenisation has been chosen such, being about 290 °C, that a molecular desintegration takes place of the polyolefinic material. For carrying out the mixing, one uses a mixer, in which high shear forces can be exerted on the mixture. This process however is strongly different from the process according to the invention, because for the production of rubber bitumen one goes out according to the invention from rubber, bitumen and oil without further polymers. Asphalt can be considered as bitumen to which sand, gravel and further additives have been added.

In practice a method is carried out by mixing the starting materials while heating to a temperature of about 205 °C, whereby the mixture of rubber and oil is supplied to the heated bitumen, and mixing is carried out by means of a slowly rotating stirrer. Said stirring is controlled such that the rubber particles are not stretched. Heating takes place by means of fire tubes. A drawback of this known method is that the mixing step is not carried out sufficiently homogeneously, that the temperature distribution is not regular and that there is a great chance of charring as a result of local overheating of the starting materials, viz. bitumen and rubber particles, near the fire tubes. Rubber bitumen is inter alia used for preparing asphalt for roads having a sound-damping layer with enhanced moisture-permeability.

This known method has now been improved according to the invention by homogenisation and heating in three steps:
1) mixing and heating under high shearing forces in a first mixer bitumen, rubber particles and oil at a temperature of 150-160 °C by supplying rubber particles and oil, which is optionally heated, to pre-heated bitumen;
2) supplying the heated and homogenized rubber bitumen mixture to a second mixer where said mixture is heated to a temperature of 210-240 °C for a time longer than 0.5 hours, wherein the temperature is controlled using a heat-exchanger;
3) lowering the temperature of the resulting rubber bitumen mixture to a temperature of from 190 °C to less than 210 °C, and maintaining the mixture at said temperature for at least two hours, whereby said mixture is ripened, and optionally adding sand, gravel or other additives to prepare asphalt.

By homogenisation and heating in three steps the physical processing of the starting materials, viz. the mixing step and the chemical devulcanisation and partial dissolution of the rubber particles are in fact distinct processes, so that the end product being rubber bitumen obtains the modified, desirable properties Said stepwise homogenisation and heating therefore forms an essential aspect of the method according to the invention. In this process the starting materials have been used in the following weight ratio: at least 75 bitumen, 15-20% rubber and 1-5% oil.

According to the process as disclosed in British patent 1,360,616 carried out while slowly stirring, particles of rubber remained relatively long, viz. for 1 - 2 hours in the mixture in the shape of lumps. Homogenisation can be accelerated by elevating the temperature. At higher temperatures the viscosity is decreased and the rubber particles will disintegrate sooner. However a drawback of this higher temperature is, that also the chemical process of devulcanizing and dissolving the rubber particles already takes place in a non-homogeneous mixture, as a result of which the reproducibility and constantness of the properties of the final product are affected. The method according to the invention makes it possible to obtain a more homogeneous final product, whereby the final product is more controllable at a certain point of time, and is available on demand, dependent on the required properties.

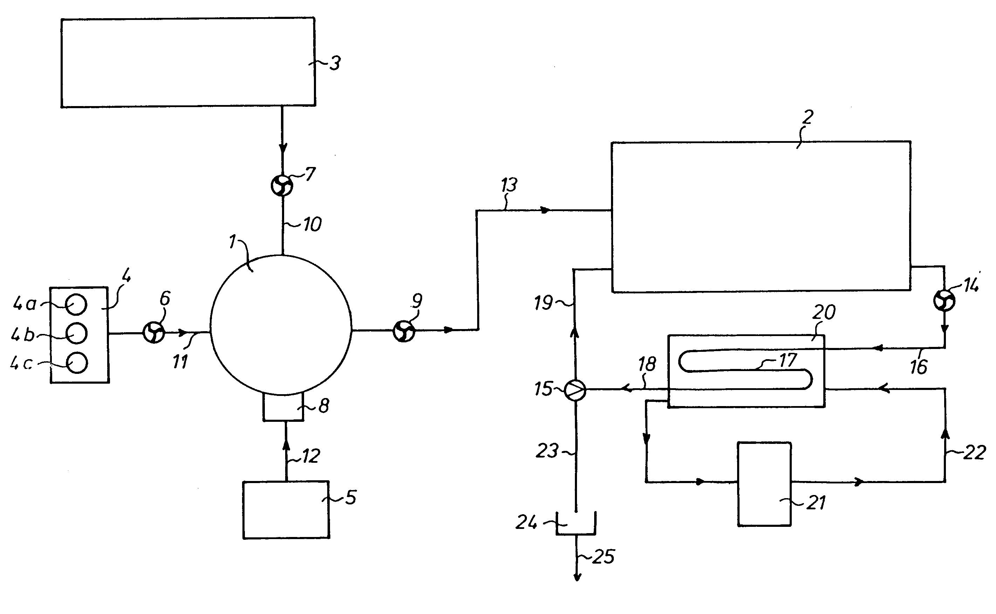

The invention will be explained in more detail hereafter, by means of the following description, wherein reference is made to the accompanying drawing, in which:
the figure diagrammatically illustrates the device preferably used with the method according tot the invention.

In the fig. the mixer has been indicated by 1 and the heating means by 2, whereby mixing takes place in the mixer 1 while exerting shearing forces, for which a high-shear mixer having a capacity of e.g. 4 m³ is used. To said mixer bitumen is supplied, via the line 10, by means of a pump 7, said bitumen, being pre-heated to a temperature of about 165 °C, being present in the pre-heated storage vessel 3. Via the line 11 oil is supplied to the mixer 1 by means of a pump 6. The oil supply is present in barrels, which are schematically indicated in the container 4 by reference numbers 4a, 4b and 4c. Preferably the oil is heated to a temperature of about 40 °C, before being supplied to the mixer 1. The mixer 1 is also fed with the rubber particles present in the storage bin 5, said rubber particles being supplied via the line 12 and the rubber dosaging means 8. Preferably the rubber particles are obtained by grinding used car tyres, although it is also possible to use other synthetic rubber.

In the high shear mixer 1, mixing takes place with a high mixing intensity, within about 15 - 30 minutes. In the as such known high shear mixer an amount of material of 3-15 m³/minute is supplied at a rotation number of about 3000 rotations/minute, through a gap having a surface of about 1700 mm². Under these circumstances high shear forces have been exerted on the mixture of bitumen, oil and rubber. The indicated values should not be considered as the restrictions and just as an example for the circumstances under which high shear forces can be exerted on the mixture of starting materials. Subsequent to the homogenisation step the starting materials mixed, are supplied to the mixing drum 2, which has a capacity of 25 - 30 m³, by means of the pump 9, in quantities of about 3 m³. The chemical process then takes place in the mixing drum 2. The rubber particles are in a homogeneous condition with respect to the bitumen, because the rubber particles are surrounded by bitumen. The heating of the homogeneous mixture of rubber, bitumen and oil in the mixing drum is carried out by means of a heat exchanger 20, to which on the one hand the homogeneous mixture is supplied, via the line 16, by means of the pump 14, and on the other hand hot oil having a temperature of about 240 °C is supplied to the heat exchanger 20. Said oil is heated up to a temperature of about 240 °C in the heater 21, and said heated oil is supplied to the heat exchanger 20 via the line 22. By circulating the homogeneous mixture through the heat exchanger the mixture is heated up to a temperature of about 205 °C, whereby it is possible to select a temperature slightly higher than 205 °C, in order to start the ripening process. This may be controlled by reducing the flow rate in the heat exchanger.

Upon completion of the ripening process a part of the circulating homogeneous mixture can be discharged by means of the three-way valve 15, via the line 23 and the sieve 24, so that the heated rubber bitumen having a temperature of 180 - 190 °C is ready for immediate use. Ripening can be carried out in two ways, being recirculating of the mixture in the mixing drum 2 or discharge of the mixture via line 25 to a ripening vessel that has not been indicated in the drawing. The advantage of this last way of carrying out the method, after discharge of the mixture from the mixing drum 2, is that this mixing drum and heat exchanger are available again for filling with new starting material from mixer 1. It is of coarse also possible to duplicate the part of the device between lines 13 and 25 in the apparatus according to the invention, so that one part can be used for the second step of the process according the the invention and the other part for ageing in the third step.

The ripening process is completed by stirring the mixture for 8 - 12 hours, whereby the temperature is lowered to 190 - 200 °C. The temperature at which ripening takes place is also dependent on the subsequent application of the rubber bitumen. For certain applications a processing temperature of e.g. 195 °C is desired. Forced cooling is problematic, and therefore it is desirable that the ripening takes place at a temperature of 195 °C. Another advantage of having the ripening process take place at a slightly reduced temperature, viz. 190 - 200 °C instead of 205 °C, is that because of the slower decrease in the viscosity the material is processable for a longer period of time. However this advantage also has been obtained in regard with the known process from British patent 1,360,616 when ripening takes place at a temperature of 205 °C, because with the conventional method the final temerpature was usually 220 - 240 °C.

The invention will be explained in more detail by means of the following example.

### Example

One supplied 2400 kg of bitumen having a temperature of 165 °C, 510 kg of granular rubber having a temperature of 20 °C and 90 kg of oil having a temperature of 40 °C to the mixer 1 where these materials have been mixed. The starting temperature of the mixture in the mixer 1 was 155 °C. Mixing took place for 15 minutes, whilst the total cycle time, supplying and discharging by means of pumps included, was about 30 minutes. A total of 9 mixtures was prepared in this manner, and supplied, via the line 13, to the mixing drum 2 by means of the pump 9. Consequently the overall mixing time for the 9 mixtures in the mixer 1 was 4.5 hours.

As soon as the first quantity of 3000 kg of rubber/bitumen mixture had been supplied to the mixing drum 2, the heating of the heat exchanger 20 to a temperature of 210 °C, by means of the oil heater 21, was started, said oil heater being heated up to a temperature of 240 °C. For 4 hours the mixture was recirculated through the mixing drum 2 and the heat exchanger 20 via the lines 16, 17, 18 and 19, whereby the final temperature was maintained at 205 °C. After 4 hours the mixing drum was filled and ripening took place for 10 hours, at a temperature of 195 °C. Then the mixing drum was emptied via the three-way valve 15, the line 23, the sieve 24 and the line 25, for immediate use. In case it is required for the rubber bitumen to be delivered to have a temperature higher than 195 °C, said discharge takes place via the heat exchanger 20, by means of which the temperature may be brought to e.g. 200 °C or up higher.

## Claims

1. A method of preparing rubber bitumen and optionally asphalt, by homogenisation and heating in three steps:
1) mixing and heating under high shearing forces in a first mixer bitumen, rubber particles and oil at a temperature of 150-160 °C by supplying rubber particles and oil, which is optionally heated, to pre-heated bitumen;
2) supplying the heated and homogenized rubber bitumen mixture to a second mixer where said mixture is heated to a temperature of 210-240 °C for a time longer than 0.5 hours, wherein the temperature is controlled using a heat-exchanger;
3) lowering the temperature of the resulting rubber bitumen mixture to a temperature of from 190 °C to less than 210 °C, and maintaining the mixture at said temperature for at least two hours, whereby said mixture is ripened, and optionally adding sand, gravel or other additives to prepare asphalt.

2. A method according to claim 1, in which the starting materials are used in the following weight ratio: at least 75 bitumen, 15-20% rubber and 1-5% oil.

3. A method according to claim 1, in which the mixing in the first step is carried out in a high shearing mixer having a surface of the gap of 1700 mm², a rotation number of 3000 rotations per minute and a supplied amount of material of 3-15 m³/minute, dependent on the viscosity.

4. A method according to claim 1, in which said heating of the bitumen comprising mixture in step 2) is carried out by recirculation the mixture by means of a pump via the heat exchanger maintained at a temperature of 210-240 °C.

5. A method according to claims 1-4, in which the ripening takes place at a temperature of from 190 to less than 210 °C during 10-20 hours.

6. A method according to claims 1-5, in which the rubber particles are obtained by grinding used car tyres.

## Patentansprüche

1. Verfahren zur Herstellung von Elastomerbitumen und gegebenenfalls Asphalt durch Homogenisierung und Erhitzen in drei Stufen:
1)Mischen und Erhitzen von Bitumen, Gummiteilchen und Öl unter hohen Scherkräften in einem ersten Mischapparat bei einer Temperatur von 150 - 160 °C, indem Gummiteilchen und Öl, das gegebenenfalls erhitzt sein kann, vorgeheiztem Bitumen zugesetzt werden;
2) Einleiten des erhitzten und homogenisierten Elastomerbitumens in einen zweiten Mischapparat, wo die Mischung für mehr als ½ Stunde auf 210 - 240 °C erhitzt wird, wobei die Temperatur mittels eines Wärmeaustauschers überwacht wird;
3) Absenken der Temperatur der erhaltenen Elastomerbitumenmischung auf eine Temperatur, die zwischen 190 °C und weniger als 210 °C liegt und Konstanthalten dieser Temperatur in der Mischung für mindestens zwei Stunden, wobei die Mischung reift und gegebenenfalls Zugabe von Sand, Kies oder anderen Zusätzen zur Herstellung von Asphalt.

2. Verfahren nach Anspruch 1, **dadurch gekennzeichnet,** daß die Eingangsmaterialien in folgendem Mengenverhältnis eingesetzt werden: mindestens 75 % Bitumen, 15 - 20 % Gummi und 1 -5 % Öl.

3. Verfahren nach Anspruch 1, **dadurch gekennzeichnet,** daß der Mischvorgang im ersten Schritt in einem Mischapparat mit hohen Scherkräften, der eine Öffnung von 1700 mm² hat, bei 3000 min⁻¹ und einer Materialzufuhr von 3 - 15 m³/min (in Abhängigkeit von der Viskosität) durchgeführt wird.

4. Verfahren nach Anspruch 1, **dadurch gekennzeichnet,** daß das Erhitzen der Mischung, die den Bitumen enthält, in Stufe 2) durch Rückführung der Mischung mit Hilfe einer Pumpe durch den Wärmeaustauscher erfolgt, dessen Temperatur zwischen 210 - 240 °C gehalten wird.

5. Verfahren nach Ansprüchen 1 - 4, **dadurch gekennzeichnet,** daß das Reifen 10 - 20 Stunden bei einer Temperatur zwischen 190 und weniger als 210 °C stattfindet.

6. Verfahren nach Ansprüchen 1 - 5, **dadurch gekennzeichnet,** daß die Gummiteilchen durch Mahlen gebrauchter Autoreifen erhalten werden.

## Revendications

1. Procédé de préparation de bitume et éventuellement d'asphalte contenant du caoutchouc par des opérations d'homogénéisation et de chauffage en trois étapes consistant :
1) à mélanger et à chauffer, sous l'action de forces de cisaillement élevées dans un premier malaxeur, du bitume, des particules de caoutchouc et de l'huile à une température de 150-160°C, en fournissant les particules de caoutchouc et l'huile, qui est éventuellement chauffée, au bitume préchauffé;
2) à fournir le mélange chauffé et homogénéisé du bitume contenant du caoutchouc à un second malaxeur où ce mélange est chauffé à une température de 210-240°C, pendant une période de temps supérieure à 0,5 heure, la température étant commandée en utilisant un échangeur de chaleur; et
3) à abaisser la température du mélange résultant du bitume contenant du caoutchouc à une température allant de 190°C à moins de 210°C et à maintenir le mélange à cette température pendant au moins deux heures, de telle façon que le mélange soit amené à maturation, et à ajouter éventuellement du sable, du gravier ou d'autres additifs pour préparer de l'asphalte.

2. Procédé suivant la revendication 1 caractérisé en ce que les matières premières sont utilisées dans le rapport pondéral suivant : au moins 75% de bitume, de 15 à 20% de caoutchouc et de 1 à 5% d'huile.

3. Procédé suivant la revendication 1 caractérisé en ce que le mélange est effectué, au cours de la première étape, dans un malaxeur à cisaillement élevé ayant une surface de l'intervalle de 1700 mm², une vitesse de rotation de 3000 tours par minute et un débit d'alimentation des matières premières de 3 à 15 m³/minute suivant la viscosité.

4. Procédé suivant la revendication 1 caractérisé en ce que le chauffage du mélange constituant le bitume, au cours de la deuxième étape, est réalisé par une recirculation du mélange, au moyen d'une pompe, à travers l'échangeur de chaleur maintenu à une température de 210-240°C.

5. Procédé suivant l'une quelconque des revendications 1 à 4 caractérisé en ce que la maturation a lieu à une température allant de 190°C à moins de 210°C pendant une période de 10 à 20 heures.

6. Procédé suivant l'une quelconque des revendications 1 à 5 caractérisé en ce que les particules de caoutchouc sont obtenues par broyage de pneumatiques de véhicule usés.
